# EUROPÄISCHE PATENTSCHRIFT

(11) **EP 3 355 141 B1**
(45) Veröffentlichungstag und Bekanntmachung des Hinweises auf die Patenterteilung: **06.03.2019**
(21) Anmeldenummer: 17153570.1
(22) Anmeldetag: 27.01.2017
(51) Int. Cl.: G05B 19/418

(54) **OPERATOR-SYSTEM FÜR EIN PROZESSLEITSYSTEM**
OPERATOR SYSTEM FOR A PROCESS CONTROL SYSTEM
SYSTÈME D'OPÉRATEUR POUR UN SYSTÈME DE CONTRÔLE DE PROCESSUS

(43) Veröffentlichungstag der Anmeldung: 01.08.2018
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)

(56) Entgegenhaltungen:
- WO-A1-2008/022606
- US-A1- 2010 263 018
- Siemens: "SIMATIC PCS 7 Process Control System System components siemens.com/simatic-pcs7 Catalog ST PCS 7 Edition 2016", , 31. Dezember 2016 (2016-12-31), Seiten 101-121, XP055397241, Karlsruhe, DE Gefunden im Internet: URL:https://www.automation.siemens.com/w2/ efiles/pcs7/pdf/76/KG_STPCS7_2016_en_Web.p df [gefunden am 2017-08-09]

## Beschreibung

Die Erfindung betrifft ein Operator-System für ein Prozessleitsystem gemäß den im Oberbegriff des Patentanspruchs 1 angegebenen Maßnahmen.

Ein derartiges Operator-System ist aus dem Siemens-Katalog "ST PCS7", Kapitel 5, Ausgabe 2016 bekannt. Dieses Operator-System, welches mindestens einen Operator-Server und mindestens einen Operator-Client aufweist, ist dazu ausgebildet, eine komfortable und sichere Prozessführung zu ermöglichen, wobei ein Operator den Prozessablauf beobachten und bei Bedarf steuernd eingreifen kann.

Es kann vorkommen, dass ein Operator sich kurzzeitig durch einen anderen Operator vertreten lassen muss. Um sicherzustellen, dass der andere Operator auf Anwendungen bzw. Projekte des einen Operators zugreifen kann, ist es erforderlich, dass der eine Operator sich zunächst abmeldet bzw. ausloggt und der andere Operator sich anmeldet bzw. einloggt. Dabei kann der andere Operator nur dann auf die Anwendungen bzw. auf die Projekte des einen Operators zugreifen, falls der andere Operator exakt die gleichen Zugriffs- bzw. Funktionsrechte wie die des einen Operators besitzt. Für den Fall, dass der eine Operator seine Arbeit nach einer kurzen Zeit wieder aufnehmen möchte, muss sich der andere Operator wieder ausloggen und der eine Operator wieder einloggen.

Insbesondere für den Fall, dass der eine Operator durch eine Vielzahl von weiteren Operatoren vertreten werden soll, müssen für alle dieser weiteren Operatoren im Voraus entsprechende Zugriffs- und Funktionsrechte eingeplant werden. Dies gilt auch dann, wenn eine kurzzeitige Vertretung ausschließlich für einen Notfall einzuplanen ist und ferner die Wahrscheinlichkeit vernachlässigbar gering ist, dass für jeden einzelnen eingeplanten potentiellen Vertreter die Vertretung überhaupt wahrzunehmen ist. Aufgrund der vielen in eine entsprechende Liste einzupflegenden Vertreter mit den gleichen Zugriffs- und Funktionsrechten wird diese Liste mit den eingetragenen Vertretern und zugehörigen Zugriffs- und Funktionsrechten immer umfangreicher, was zur Erhöhung des Verwaltungsaufwands sowie zu umfangreichen Datenmengen und somit zu Problemen führt, die im Hinblick auf die Verfügbarkeit einer zu steuernden Anlage störend sein können.

Der Erfindung liegt daher die Aufgabe zugrunde, ein Operator-System gemäß dem Oberbegriff des Anspruchs 1 zu schaffen, mittels dessen eine temporäre Vertretung eines Operators durch einen anderen Operator vereinfacht wird.

Diese Aufgabe wird durch die im kennzeichnenden Teil des Anspruchs 1 angegebenen Maßnahmen gelöst.

Vorteilhaft ist, dass die Zugriffs- und Funktionsrechte eines Operators flexibel, dynamisch und temporär auf einen weiteren Operator übertragen werden können, wodurch die Verfügbarkeit einer zu steuernden Anlage erhöht wird. Der Verwaltungsaufwand und die Datenmengen werden verringert, weil die entsprechenden Listen bzw. Tabellen mit Zugriffs- und Funktionsrechten der Operatoren optimiert werden können. Nur dedizierte - und in der Regel sehr wenige - Operatoren bzw. Benutzer werden "fest eingeplant", weitere Operatoren können bei Bedarf "einspringen", indem diese weiteren Operatoren die notwendigen Zugriffs- und Funktionsrechte für einen kurzen Zeitraum zugeteilt bekommen. Vorteilhaft ist darüber hinaus, dass zur Aufrechterhaltung des so genannten Minimalitätsprinzips der NAMUR-Empfehlung (NAMUR-Arbeitsblatt 115 "IT-Sicherheit für Systeme der Automatisierungstechnik: Randbedingungen für Maßnahmen beim Einsatz in der Prozessindustrie") beigetragen wird. Dieses Prinzip besagt, dass jeder Benutzer nur so viele Rechte bekommen darf, wie er tatsächlich benötigt ("so viele Rechte wie nötig und so wenige Rechte wie möglich").

Die Erfindung geht von der Idee aus, während des Bedien- und Beobachtens eines zu steuernden Prozesses Zugriffs- bzw. Funktionsrechte auf einer im Hinblick auf die Security-Aspekte sicheren Art und Weise temporär zu übertragen, ohne dass dazu mittels eines Engineering-Systems Änderungen in einer Zugriffs- und Funktionsrechte-Liste vorgenommen werden müssen. Ein Operator, der über einen Operator-Client angemeldet ist, kann seine Funktionsrechte einem weiteren Operator temporär "vererben", wobei dieser dann die Zugriffs- und Funktionsrechte des einen Operators besitzt, jedoch den "Claim" des weiteren Operators verwendet.

Weitere vorteilhafte Ausgestaltungen der Erfindung ergeben sich aus den Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form:
- Figuren 1 und 2: Bestandteile einer Zugriffsteuerung eines Operator-Servers und
- Figur 3: ein Operator-System.

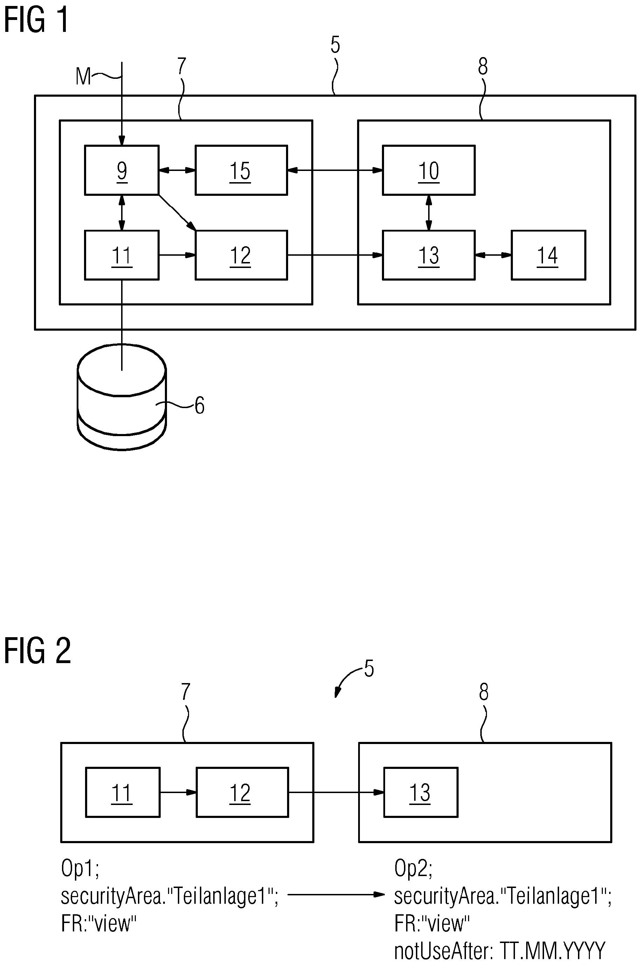

Die in den Figuren 1 bis 3 dargestellten gleichen Teile sind mit gleichen Bezugszeichen versehen.

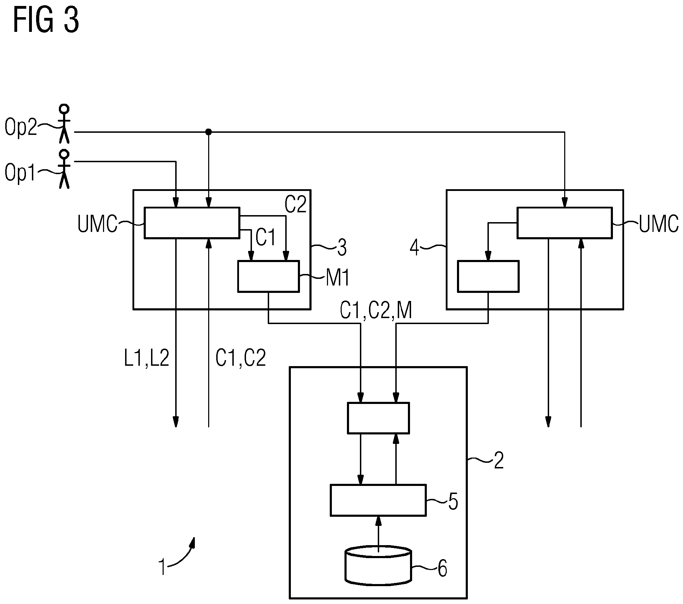

Es wird zunächst auf Figur 3 verwiesen, in welcher ein Operator-System 1 dargestellt ist. Dieses Operator-System 1 besteht im vorliegenden Ausführungsbeispiel aus einem Operator-Server 2 - im Folgenden als OS-Server bezeichnet - und zwei mit diesem OS-Server 2 verbundene Operator-Clients 3, 4. Selbstverständlich kann das Operator-System 1, welches zum Bedienen und Beobachten eines zu steuernden technischen Prozesses bzw. einer zu steuernden Anlage vorgesehen ist, weitere Operator-Clients - im Folgenden als OS-Clients bezeichnet - aufweisen. Um auf eine im OS-Server 2 ablauffähige Operator-Server-Anwendung, z. B. auf eine Anwendung in Form einer Bedien- und Beobachtungs-Software oder eines Bedien- und Beobachtungs-Tools, zugreifen und damit diese Anwendung nutzen zu können, ist es erforderlich, dass ein Operator bzw. Anwender sich authentifiziert. Unter einer Operator-Server-Anwendung ist eine Anwendung zu verstehen, die primär auf diesem Server abläuft bzw. verarbeitet wird, wobei Teile dieser Anwendung, z. B. die Ausgabe von Bildern oder Ergebnisse einer Berechnung, auf einem oder auf jedem der Clients 3, 4 visualisiert werden.

Im Folgenden wird angenommen, dass ein erster Operator Op1 sich gewöhnlich am Client 3 und ein zweiter Operator Op2 sich gewöhnlich am Client 3 oder 4 authentifiziert. Die Authentifizierung erfolgt in der Art und Weise, dass z. B. der Operator Op1 sich über eine geeignete UMC-Komponente UMC (User Management Component) zunächst mit seinem Benutzernamen und seinem Passwort, welche Login-Daten Li1 repräsentieren, an einem hier nicht dargestellten Authentifizierungs-Server authentifiziert. Für den Fall, dass der erste Operator Op1 sich mit seinen Login-Daten L1 am Authentifizierungs-Server authentifizieren kann, was darauf hinweist, dass der Operator Op1 ein zugelassener Benutzer des Operator-Systems 1 ist, erzeugt der Authentifizierungs-Server aufgrund der Login-Daten L1 für den authentifizierten Operator einen operatorspezifischen Datensatz C1 - im Folgenden als Claim bezeichnet - und übermittelt diesen Claim C1 dem OS-Client 3 des Operator-Systems 1, an welchem der Operator Op1 sich angemeldet hat.

Der Claim C1 umfasst eine Vielzahl von Informationen, z. B. Informationen über das erfolgreiche Login des ersten Operators Op1, den Benutzernamen des ersten Operators Op1, Zugriffs- bzw. Funktionsrechte über die Nutzung einer oder einer Vielzahl von Operator-Server-Anwendungen, über die Nutzungsdauer dieser Anwendungen und/oder der Nutzungsart (Vollzugriff, nur Lesezugriffe, Schreibzugriffe, ... ), wobei die User-Management-Komponente UMC des Clients 3 den Claim C1 einer Zugriffsteuerung 5 des OS-Servers 2 zuführt. Die Zugriffsteuerung 5 vergleicht den Claim C1 mit diesem Claim C1 zugeordneten bzw. entsprechenden Teilen von Zugriffberechtigungs-Datensätzen einer Konfigurationsdatei 6, welche im Rahmen einer Projektierung und Konfigurierung mittels eines hier nicht dargestellten Engineering-Systems erzeugt und auf dem OS-Server 2 hinterlegt wurde. In Abhängigkeit des Vergleichsergebnisses erlaubt oder verhindert die Zugriffsteuerung 5 dem autorisierten bzw. authentifizierten Operator Op1 den Zugriff auf die Operator-Server-Anwendung.

Um zu ermöglichen, dass der erste Operator Op1 sein Zugriffs-bzw. Funktionsrecht dem zweiten Operator Op2 temporär übertragen kann, weist der in der Konfigurationsdatei 6 hinterlegte Zugriffberechtigungs-Datensatz des ersten Operators Op1 eine Angabe auf, welche der Zugriffssteuerung 5 anzeigt, dass das Zugriffs- bzw. Funktionsrecht des ersten Operators Op1 auf den zweiten Operator Op2 übertragbar ist. Die Angabe kann derart formuliert sein, dass das Zugriffsrecht auch einem weiteren authentifizierten Operator, einer Gruppe von authentifizierten Operatoren oder auch jedem der authentifizierten Operatoren übertragen werden kann. Ferner ist der in der Konfigurationsdatei 6 hinterlegte Zugriffberechtigungs-Datensatz des zweiten Operators Op2 mit einer Angabe versehen, die der Zugriffssteuerung 5 anzeigt, dass der zweite Operator Op2 das Zugriffs- bzw. Funktionsrecht des ersten Operators übernehmen kann bzw. übernehmen darf. Auch hier kann die Angabe derart formuliert sein, dass das Zugriffsrecht von einem weiteren authentifizierten Operator, einer Gruppe von authentifizierten Operatoren oder auch jedem der authentifizierten Operatoren übernommen werden kann.

Die Übertragung des Zugriffsrechtes vom ersten authentifizierten bzw. eingeloggten Operator Op1 zum zweiten authentifizierten bzw. eingeloggten Operator Op2 wird von dem ersten Operator Op1 initiiert. Aufgrund einer geeigneten Eingabe am OS-Client 3 übermittelt dieser OS-Client 3 der Zugriffssteuerung einen Methodenaufruf, welcher zum Vererben bzw. zum Übernehmen des Zugriffsrechtes vorgesehen ist und die Vererbung anstößt.

Die Eingabe des ersten Operators Op1 am OS-Client 3 kann z. B. menügesteuert erfolgen, wobei der erste Operator Op1 in ein Bedienfeld (Login-Feld) einer Eingabemaske den Benutzernamen des zweiten Operator Op2 als seinen temporärer Vertreter und in ein weiteres Bedienfeld eine Zeitangabe für die Dauer der temporären Vertretung einträgt. Aufgrund dieser Eingabe wird automatisch mittels einer Komponente M1 des Clients 3 ein Methodenaufruf M
"checkRights(claim1,securityArea,FR,sig1, claim2,notuseAfter,sig2)"
erzeugt, wobei die Parameter des Methodenaufrufs M bedeuten:

| | |
|---|---|
| - claim1: | der operatorspezifische Datensatz C1 des ersten Operators Op1, |
| - claim2: | ein operatorspezifischer Datensatz C2 des zweiten Operators Op2, |
| - securityArea: | der Sicherheitsbereich, für welchen die Operator-Server-Anwendung vorgesehen ist, |
| - FR: | das Zugriffs-bzw. Funktionsrecht auf die Operator-Server-Anwendung (z. B. Visualisieren einer Anlage oder einer Bildhierarchie auf dem OS-Client), |
| - sig1: | ein Integritätsmerkmal bzw. Signatur zum Schutz des claim1 gegen Manipulationen, wobei sig1 eine zu den drei miteinander konkatenierten Daten bzw. Datensätzen claim1, securityArea und FR unter Verwendung eines privaten Schlüssels (des ersten Operators) generierte Signatur sig1=Sig_Gen (claim∥securityArea∥FR) ist, Sig_Gen ein Signaturgenerierungsverfahren ist und das Zeichen "∥" die Konkatenation bedeutet, |
| - notUserAfter: | die Gültigkeitsdauer bzw. Befristung der Übertragung des Zugriffs-bzw. Funktionsrechts, |
| - sig2: | ein Integritätsmerkmal bzw. Signatur zum Schutz des claim2 gegen Manipulationen, wobei sig2 eine zu den zwei miteinander konkatenierten Daten bzw. Datensätzen claim2 und notUseAfter unter Verwendung eines privaten Schlüssels (des zweiten Operators) generierte Signatur sig2=Sig_Gen(claim2∥notUseAfter) ist, wobei Sig_Gen wiederum ein Signaturgenerierungsverfahren ist und das Zeichen "∥" wiederum die Konkatenation bedeutet. |

Für den Fall, dass der erste Operator Op1 sich von dem zweiten Operator Op2 vertreten lassen möchte, der zweite Operator Op2 sich allerdings noch nicht angemeldet bzw. autorisiert hat, wird durch den erläuterten Methodenaufruf "checkRights" das Login-Feld im OS-Client 3 des ersten Operator Op1 geöffnet, mit dem sich der zweite Operator Op2 durch seine Login-Daten Li2 am Authentifizierungs-Server authentifizieren bzw. autorisieren muss ("ordentliche Übergabe"), wobei der Authentifizierungs-Server für den zweiten Operator Op2 den operatorspezifischen Datensatz C2 (Claim 2) der UMC-Komponente UMC des OS-Clients 3 zuführt. Bei dieser Authentifizierung wird auch - wie erläutert - die Signatur "sig2" zu den miteinander konkatenierten Datensätzen "claim2" und "notUseAfter" unter Verwendung des Private Key des zweiten Operators Op2 generiert, um zum Schutz gegen unberechtigte Manipulation bzw. einen Versuch, die Funktionsrechte unberechtigt zu erlangen, beizutragen (sig2=Sig_Gen(claim1∥notUseAfter). Ergibt die Signaturverifikation der Signaturen sig1 und sig2 (unter Verwendung der öffentlich verfügbaren Public Key der Operatoren Op1, Op2), dass die Signaturen gültig sind, so wird - wie erläutert - anschließend geprüft, ob der erste Operator Op1 das Zugriffs-bzw. Funktionsrecht übertragen bzw. vererben und der zweite Operator Op2 das Zugriffs- bzw. Funktionsrecht übernehmen darf. Ist die Prüfung erfolgreich durchlaufen, so wird mittels des Methodenaufrufs M "checkRights" die Übertragung des Zugriffs- bzw. Funktionsrechts "angestoßen".

Im Folgenden wird auf die Figuren 1 und 2 verwiesen, in welchen Bestandteile der Zugriffssteuerung 5 des Operator-Servers 2 gemäß Figur 3 dargestellt sind. Die Zugriffssteuerung 5 weist eine erste und eine zweite Steuerkomponente 7, 8 auf, wobei die erste Steuerkomponente 7 die operatorspezifischen Parameter "claim1,securityArea,FR,sig1" des Methodenaufrufs M ("checkRights") für den ersten Operator Op1 und die zweite Steuerkomponente 8 die operatorspezifischen Parameter "claim2,notuseAfter,sig2" dieses Methodenaufrufs M ("checkRights") für den zweiten Operator Op2 verarbeitet. Die erste und die zweite Steuerkomponente 7, 8 sind jeweils mit einer Prüfkomponente 9, 10 versehen, wobei die Prüfkomponente 9 der ersten Steuerkomponente 7 die operatorspezifischen Parameter der Operatoren Op1, Op2 in seinen Cache 11 hinterlegt. Ein Replicator 12 der ersten Steuerkomponente 7 veranlasst, das Zugriffs- bzw. Funktionsrecht "FR" für den Sicherheitsbereich "securityArea" sowie die Gültigkeitsdauer des Zugriffsrechts aus dem Cache 11 auszulesen und in einen Cache 13 der zweiten Steuerkomponente 8 zu hinterlegen, wobei der Replicator 12 den Benutzernamen des ersten Operators Op1 (aus dem Claim C1 des ersten Operators Op1 bekannt) durch den Benutzernamen des zweiten Operators Op2 (aus dem Claim C2 des zweiten Operators Op2 bekannt) ersetzt (Figur 2).

Ab diesem Zeitpunkt verfügt nun der zweite Operator Op2 über dasselbe Zugriffs- bzw. Funktionsrecht im Hinblick auf die Operator-Server-Anwendung, z. B. das Zugriffs- bzw. Funktionsrecht bezüglich einer Software zum Visualisieren (View) einer Anlage oder einer Bildhierarchie, wobei sich dieses Zugriffs- bzw. Funktionsrecht auf den vorgegebenen bzw. festgelegten Sicherheitsbereich (securityArea - z. B. Teilanlage 1) und den vorgegebenen bzw. festgelegten Zeitraum bzw. Zeitdauer (notUseAfter: - TT.MM.YYYY)) beschränkt. Wird nun für diese Anwendung für den zweiten Operator Op2 das temporär übertragene bzw. zugewiesene Funktionsrecht via dem Methodenaufruf M ("checkRights (...)) geprüft, so wird zunächst die Prüfkomponente 9 der ersten Steuerkomponente 7 dem OS-Client 3 ein "false" (Zugriff abgelehnt) übermitteln, weil für den zweiten Operator Op2 in der Konfigurationsdatei 6 ein entsprechendes Zugriffs- bzw. Funktionsrecht initial nicht vorhanden ist. Gleichzeitig wird jedoch dieselbe Prüfung über eine Komponente 15 in der Prüfkomponente 10 der zweiten Steuerkomponente 8 durchgeführt, da dort die Verwaltung des temporär übertragenen bzw. zugewiesenen Funktionsrechtes stattfindet. Für den Fall, dass die zweite Steuerkomponente 8 für das geprüfte bzw. abgefragte Zugriffs- bzw. Funktionsrecht dem OS-Client 3 ein "true" (Zugriff erlaubt) übermittelt, so ist die Anwendung für den zweiten Operator Op2 freigegeben.

Aufgrund dessen, dass Zugriffs- bzw. Funktionsrechte nur vorübergehend bzw. zeitlich befristet übergeben werden, wird der Cache 13 der zweiten Steuerkomponente 8 durch eine Komponente 14 dieser zweiten Steuerkomponente 8 regelmäßig um veraltete Einträge ("notUseAfter" abgelaufen) bereinigt. Aufgrund der Cache-Replikation sind alle temporär zugewiesenen Funktionsrechte flüchtig, was bedeutet, dass im Falle eines Neustarts des Operator-Systems 1 diese Rechte verloren gehen und ggf. neu übertragen werden müssen.

Die Zugriffsberechtigungs-Datensätze, die in der Konfigurationsdatei 6 hinterlegt sind, können ferner jeweils eine weitere Angabe umfassen, die der Zugriffssteuerung 5 anzeigt, dass ein Operator oder eine automatische Instanz die Rolle eines so genannten "Confirmers" übernehmen darf. Dies bedeutet, dass dieser einer Übertragung eines Zugriffs- bzw. Funktionsrechts beispielsweise vom ersten Operator Op1 zu dem zweiten Operator Op2 zustimmen muss, bevor dieses Zugriffs- bzw. Funktionsrecht übertragen werden kann. Dadurch kann ein höherer Security-Level erreicht werden. Für den Fall, dass ein weiterer Operator die Rolle des "Confirmers" übernimmt, kann dieser durch sein Login bestätigen, dass er der Rechteübertragung zustimmt. Der erwähnte Parameter des Methodenaufrufs M
"(claim1,securityArea,FR,sig1, claim2,notuseAfter,sig2)"
wird dabei unter Verwendung des "Private Keys" des weiteren Operators signiert und durch die Signatur "sig3" ergänzt, so dass der Parameter-Datensatz lautet:
"(caim1,securityArea,FR,sig1, claim2,notuseAfter,sig2, sig3)".

Alternativ zur Generierung der Signatur "sig3" kann vorgesehen sein, die Miteinbeziehung des Confirmers durch die Verwendung eines sog. Confirmer-Signaturverfahrens (Designated Confirmer Signatures) zur Generierung der Signatur "sig2" technisch umzusetzen. In diesem Fall wird neben dem Private Key von dem zweiten Operator Op2 der freiverfügbare Public Key des weiteren Operators zur Generierung der Signatur "sig2" benutzt, was bewirkt, dass bei der Verifikation der Signatur "sig2" eine Interaktion mit dem weiteren Operator, bei der er seinen Private Key nutzt, erforderlich ist. Da die Generierung der Signatur "sig3" in diesem Fall entfällt, ist dieser Ansatz viel effizienter als der Ansatz, der die Generierung der Signatur "sig3" beinhaltet.

## Patentansprüche

1. Operator-System für ein Prozessleitsystem, wobei
- das Operator-System einen Operator-Server (2) und mindestens einen mit dem Operator-Server (2) verbundenen Operator-Client (3, 4) aufweist, wobei Operatoren (Op1, Op2) sich mit jeweiligen Login-Daten über den mindestens einen oder über verschiedene Operator-Clients (3, 4) des Operator-Systems (1) an einem Authentifizierung-Server authentifizieren und der Authentifizierung-Server für authentifizierte Operatoren (Op1, Op2) jeweils einen operatorspezifischen Datensatz (C1, C2) erzeugt, in welchem ein Zugriffsrecht auf mindestens eine Operator-Server-Anwendung hinterlegt ist, und
- eine Zugriffssteuerung (5) des Operator-Servers (2) dazu ausgebildet ist, die jeweiligen operatorspezifischen Datensätze (C1, C2) mit jeweiligen auf dem Operator-Server (2) hinterlegten Zugriffsberechtigungs-Datensätze zu vergleichen und in Abhängigkeit des jeweiligen Vergleichsergebnisses dem jeweiligen Operator (Op1, Op2) den Zugriff auf die mindestens eine Operator-Server-Anwendung zu erlauben oder zu verhindern,
**dadurch gekennzeichnet, dass** die Zugriffssteuerung (5) ferner dazu ausgebildet ist, das Zugriffsrecht von einem Operator (Op1) auf einen anderen Operator (Op2) temporär zu übertragen, falls
- der eine und der andere Operator (Op1, Op2) authentifiziert sind,
- der auf dem Operator-Server (2) hinterlegte Zugriffsberechtigungs-Datensatz für den einen Operator (Op1) eine Angabe umfasst, die der Zugriffssteuerung (5) anzeigt, dass das Zugriffsrecht des einen Operators (Op1) temporär übertragbar ist und
- der auf dem Operator-Server (2) hinterlegte Zugriffsberechtigungs-Datensatz für den anderen Operator (Op2) eine Angabe umfasst, die der Zugriffssteuerung (5) anzeigt, dass der andere Operator (Op2) das temporäre Zugriffsrecht übernehmen darf.

2. Operator-System nach Anspruch 1, **dadurch gekennzeichnet, dass** die Zugriffssteuerung (5) die Übertragung des Zugriffsrechtes von dem einen zu dem anderen Operator bewerkstelligt, indem die Zugriffssteuerung (5) ein durch den einen authentifizierten Operator initiierten und der Zugriffsteuerung (5) zugeführten Methodenaufruf (M) ausführt, welcher operatorspezifische Parameter umfasst, wobei
- für den einen Operator (Op1) die operatorspezifischen Parameter mindestens beinhalten
- den operatorspezifischen Datensatz (C1) des einen Operators (Op1) und
- die Operator-Server-Anwendung, auf welche sich das Zugriffrecht für den einen Operator (Op1) bezieht,
und wobei
- für den anderen Operator (Op2) die operatorspezifischen Parameter mindestens beinhalten,
- den operatorspezifischen Datensatz (C2) des anderen Operators (Op2) und
- eine Zeitangabe oder Zeitspanne, welche die zeitliche Beschränkung des Zugriffrechtes durch den anderen Operator (Op2) repräsentiert.

3. Operator-System nach Anspruch 2, **dadurch gekennzeichnet, dass** die Zugriffssteuerung (5) eine erste und eine zweite Steuerkomponente (7, 8) aufweist, wobei die erste Steuerkomponente (7) die operatorspezifischen Parameter des Methodenaufrufs (M) für den einen Operator (Op1) und die zweite Steuerkomponente (8) die operatorspezifischen Parameter des Methodenaufrufs (M) für den anderen Operator (Op2) verarbeitet.

4. Operator-System nach Anspruch 2, **dadurch gekennzeichnet, dass** die operatorspezifischen Parameter für den einen und den anderen Operator jeweils als Parameter ferner die Angabe eines Sicherheitsbereiches beinhalten, für welchen die Operator-Server-Anwendung vorgesehen ist.

5. Operator-System nach Anspruch 2 bis 4, **dadurch gekennzeichnet, dass** aus den operatorspezifischen Parametern des einen Operators (Op1) eine Signatur und aus den operatorspezifischen Parametern des anderen Operators (Op2) eine andere Signatur gebildet wird, welche Bestandteile des Methodenaufrufs (M) sind.

## Claims

1. Operator system for a process control system, wherein
- the operator system has an operator server (2) and at least one operator client (3, 4) connected to the operator server (2), wherein operators (Op1, Op2) authenticate with respective login data via the at least one or via various operator clients (3, 4) of the operator system (1) on an authentication server and the authentication server generates for authenticated operators (Op1, Op2) one operator-specific data record (C1, C2) in each case, in which an access right to at least one operator server application is stored, and
- an access control (5) of the operator server (2) is embodied to compare the respective operator-specific data record (C1, C2) with respective access authority data records stored on the operator server (2) and, as a function of the respective comparison result, to permit the respective operator (Op1, Op2) to access the at least one operator server application or to prevent this,
**characterised in that** the access control (5) is furthermore embodied to transfer the access right from an operator (Op1) to another operator (Op2) temporarily, if
- the one and the other operator (Op1, Op2) are authenticated,
- the access authority data record stored on the operator server (2) for the one operator (Op1) comprises an indication, which notifies the access control (5) that the access right of the one operator (Op1) can be transferred temporarily and
- the access authority data record stored on the operator server (2) for the other operator (Op2) comprises an indication, which notifies the access control (5) that the other operator (Op2) is permitted to accept the temporary access right.

2. Operator system according to claim 1, **characterised in that** the access control (5) brings about the transfer of the access right from the one to the other operator by the access control (6) executing a method call (M) initiated by the one authenticated operator and directed to the access control (5), which comprises operator-specific parameters, wherein
- for the one operator (Op1) the operator-specific parameters at least include
- the operator-specific data record (C1) of the one operator (Op1) and
- the operator server application, to which the access right for the one operator (Op1) relates,
and wherein
- for the other operator (Op2) the operator-specific parameters at least include
- the operator-specific data record (C2) of the other operator (Op2) and
- a time indication or time span, which represents the time restriction of the access right by the other operator (Op2).

3. Operator system according to claim 2, **characterised in that** the access control (5) has a first and a second control component (7, 8), wherein the first control component (7) processes the operator-specific parameters of the method call (M) for the one operator (Op1) and the second control component (8) processes the operator-specific parameters of the method call (M) for the other operator (Op2).

4. Operator system according to claim 2, **characterised in that** the operator-specific parameters for the one and the other operator in each case further include as parameters the indication of a security area, for which the operator server application is provided.

5. Operator system according to claim 2 to 4, **characterised in that** one signature is formed from the operator-specific parameters of the one operator (Op1) and another signature is formed from the operator-specific parameters of the other operator (Op2), which signatures are constituent parts of the method call (M).

## Revendications

1. Système-opérateur pour un système de conduite de processus, dans lequel
- le système-opérateur a un serveur-opérateur (2), ayant au moins un client-opérateur (3, 4), relié au serveur-opérateur (2), des opérateurs (Op1, Op2), s'authentifiant à un serveur-d'authentification par, respectivement, des données logiques sur le au moins un ou sur les divers clients-opérateurs (3, 4) du système-opérateur (1) et le serveur-d'authentification produisant, pour des opérateurs (Op1, Op2) authentifiés, respectivement, un jeu (C1, C2) de données spécifique à l'opérateur, dans lequel un droit d'accès à au moins une application du serveur-opérateur est mémorisé et
- une commande (5) d'accès du serveur-opérateur (2) est constituée de manière à comparer les jeux (C1, C2) de données respectifs spécifiques à un opérateur aux jeux de données de justification d'accès mémorisés, respectivement, sur le serveur-opérateur (2) et, en fonction du résultat de la comparaison respective, permettre ou empêcher à l'opérateur (Op1, Op2) respectif l'accès à la au moins une application de serveur-opérateur,
**caractérisé en ce que** la commande (5) d'accès est constituée, en outre, pour transmettre temporairement le droit d'accès d'un opérateur (Op1) à un autre opérateur (Op2), si
- le un ou l'autre opérateur (Op1, Op2) sont authentifiés,
- le jeu de données de justification d'accès mémorisé sur le serveur opérateur (2), pour le un opérateur (Op1), comprend une indication, qui indique à la commande (5) d'accès que le droit d'accès peut être transmis temporairement au un opérateur (Op1) et
- le jeu de données de justification d'accès mémorisé sur le serveur-opérateur (2), pour l'autre opérateur (Op2), comprend une indication, qui indique à la commande (5) d'accès que l'autre opérateur (Op2) peut prendre en charge le droit d'accès temporaire.

2. Système-opérateur suivant la revendication 1, **caractérisé en ce que** la commande (5) d'accès provoque la transmission du droit d'accès de l'un à l'autre opérateur, par le fait que la commande (5) d'accès effectue un appel (M) de méthode initié par l'opérateur authentifié et envoyé à la commande (5) d'accès, appel qui comprend des paramètres spécifiques à l'opérateur, dans lequel
- pour le un opérateur (Op1), les paramètres spécifiques à un opérateur comportent au moins
- le jeu (C1) de données spécifique à un opérateur du un opérateur (Op1) et
- l'application de serveur-opérateur, à laquelle se rapporte le droit d'accès pour le un opérateur (Op1),
et dans lequel
- pour l'autre opérateur (Op2), les paramètres spécifiques à un opérateur comportent au moins
- le jeu (C2) de données spécifique à un opérateur de l'autre opérateur (Op2) et
- une indication de temps ou un laps de temps, qui représente la limitation dans le temps du droit d'accès par l'autre opérateur (Op2).

3. Système-opérateur suivant la revendication 2, **caractérisé en ce que** la commande (5) d'accès a un premier et un deuxième composants (7, 8) de commande, le premier composant (7) de commande traitant les paramètres spécifiques à un opérateur de l'appel (M) de méthode pour le un opérateur (Op1) et le deuxième composant (8) de commande des paramètres spécifiques à un opérateur de l'appel (M) de méthode pour l'autre opérateur (Op2).

4. Système-opérateur suivant la revendication 2, **caractérisé en ce que** les paramètres spécifiques à un opérateur, pour le un et pour l'autre opérateur, comportent respectivement, comme paramètres, en outre, l'indication d'une plage de sécurité pour laquelle l'application de serveur-opérateur est prévue.

5. Système-opérateur suivant la revendication 2 à 4, **caractérisé en ce qu'**à partir des paramètres spécifiques à un opérateur du un opérateur (Op1), est formée une signature et à partir des paramètres spécifiques à un opérateur de l'autre opérateur (Op2), est formée une autre signature, qui font partie de l'appel (M) de méthode.
